# FASCICULE DE BREVET EUROPEEN

(11) **EP 2 585 931 B1**
(45) Date de publication et mention de la délivrance du brevet: **22.04.2015**
(21) Numéro de dépôt: 11738013.9
(22) Date de dépôt: 23.06.2011
(51) Int. Cl.: G06F 13/28

(54) **DISPOSITIF, CHAINE ET PROCÉDÉ DE TRAITEMENT DE DONNÉES, ET PROGRAMME D'ORDINATEUR CORRESPONDANT**
VORRICHTUNG, STRING UND VERFAHREN ZUR DATENVERARBEITUNG SOWIE ZUGEHÖRIGES COMPUTERPROGRAMM
DEVICE, STRING, AND METHOD FOR PROCESSING DATA, AND CORRESPONDING COMPUTER PROGRAM

(30) Priorité: 25.06.2010 FR 1055125
(43) Date de publication de la demande: 01.05.2013
(73) Titulaire: Commissariat à l'Énergie Atomique et aux Énergies Alternatives, 75015 Paris (FR); INRIA - Institut National de Recherche en Informatique et en Automatique, 78153 Le Chesnay Cedex (FR)
(72) Inventeur: BEN ABDALLAH, Riadh, 69100 Villeurbanne (FR); FRABOULET, Antoine, F-69000 Lyon (FR); MARTIN, Jérôme, 38240 Meylan (FR); RISSET, Tanguy, F-69100 Villeurbanne (FR)
(74) Mandataire: Bonnet, Michel
(86) Numéro de dépôt international: PCT/FR2011/051456
(87) Numéro de publication internationale: WO 2011/161386

(56) Documents cités:
- US-A- 5 347 634
- US-A1- 2009 235 019

## Description

La présente invention concerne un dispositif de traitement de données, une chaîne de traitement de données comportant un tel dispositif, un procédé de traitement de données et un programme d'ordinateur correspondant.

L'invention s'applique plus particulièrement au domaine du traitement du signal numérique, notamment mais pas exclusivement pour le codage/décodage en transmission audio/vidéo ou la transmission de données selon un protocole de communication filaire ou sans fil.

La terminologie suivante sera utilisée dans le texte qui va suivre, ainsi que dans les revendications.

Une « unité de traitement programmée » est une unité de traitement conçue pour exécuter un programme d'ordinateur, c'est-à-dire pour lire des instructions et les exécuter.

Un « bloc de traitement matériel » est un circuit électronique conçu pour réaliser un ou plusieurs traitements prédéfinis et figés. Le traitement est défini par l'organisation des composants dans le bloc de traitement. Un bloc de traitement matériel est par exemple une machine à états matériels et registres.

Un « pointeur » est une donnée indiquant une adresse de mémoire, soit de manière directe (la donnée est l'adresse de la mémoire), soit de manière indirecte (la donnée est par exemple l'adresse d'un emplacement dans lequel l'adresse de mémoire indiquée est écrite). Afin d'illustrer quel emplacement est indiqué par un pointeur, ce pointeur sera représenté sur les figures à côté de l'emplacement.

L'expression « libérer une donnée » signifie définir l'emplacement dans lequel elle est écrite comme de l'espace libre, afin qu'une nouvelle donnée puisse y être écrite.

Une « primitive » est une fonction informatique, c'est-à-dire un ensemble d'instructions, écrite de manière à tirer parti le plus possible des particularités du matériel destiné à l'exécuter. On dit aussi qu'il s'agit d'une fonction « de base », par opposition à des fonctions évoluées écrites de manière générique sans tenir compte des particularités du matériel sur lequel elles peuvent être exécutées.

Afin de traiter des données, il est connu d'utiliser un dispositif comportant (i) une mémoire, (ii) un contrôleur d'accès direct en mémoire comportant un module de réception conçu pour recevoir des données provenant de l'extérieur du dispositif et pour les écrire dans une partie prédéterminée de la mémoire, appelée mémoire tampon principale, et (iii) une unité de traitement programmée pour lire et traiter des données écrites par le module de réception dans la mémoire tampon principale.

En effet, un contrôleur à accès direct en mémoire ou contrôleur DMA (de l'anglais « Direct Memory Access ») permet de transférer des données à traiter ou fournies par l'unité de traitement, en provenance ou en direction d'un périphérique tel qu'un port de communication, un disque dur ou une mémoire quelconque, entre ce périphérique et une mémoire locale du dispositif par exemple, sans intervention de l'unité de traitement si ce n'est pour initier et conclure le transfert.

Un contrôleur DMA est par exemple très utile dans un système où des accès répétés à des périphériques rapides pourraient sinon presque bloquer ou au moins ralentir le traitement effectué par l'unité de traitement. Sa présence optimise le temps de traitement des applications logicielles exécutées par l'unité de traitement en laissant le contrôleur DMA gérer les transferts de données depuis et vers la mémoire locale.

En outre, l'unité de traitement met en oeuvre un programme d'ordinateur pour réaliser le traitement des données, de sorte qu'il est relativement aisé de modifier le traitement en modifiant le programme, voire même de le changer complètement en faisant exécuter un autre programme à l'unité de traitement. Ainsi, le dispositif de traitement à unité de traitement programmée est très flexible.

Par ailleurs, il est connu de former une chaîne de traitement en « flot de données » avec des blocs matériels connectés entre eux. Dans une telle architecture, des données transitent de blocs en blocs en permanence : il n'y a pas d'interruption du flot.

Afin de disposer de flexibilité dans la chaîne de traitement, il pourrait être intéressant d'insérer une unité de traitement programmée dans la chaîne de traitement.

Cependant, une unité de traitement programmée a besoin d'avoir accès à un certain nombre prédéterminé de données en même temps pour réaliser chaque étape de son traitement, de sorte qu'elle risque d'interrompre le flot de données et de dégrader les performances de la chaîne de traitement, voire d'engendrer des erreurs dans la chaîne de traitement, tant qu'elle n'a pas accès à toutes ces données.

Par ailleurs, la publication de demande de brevet n° US 2009/0235019A1 décrit un système muni d'un module DMA et d'un processeur enregistrant des données dans une mémoire verrouillable.

Il peut ainsi être souhaité de prévoir un dispositif de traitement, comportant une unité de traitement programmée, adapté pour être intégré dans une chaîne de traitement en flot de données.

L'invention a donc pour objet un dispositif de traitement de données comportant (i) une mémoire, (ii) un contrôleur d'accès direct en mémoire comportant un module de réception conçu pour recevoir des données provenant de l'extérieur du dispositif et pour les écrire dans une partie prédéterminée de la mémoire, appelée mémoire tampon principale, (iii) une unité de traitement programmée pour lire et traiter des données écrites par le module de réception dans une zone de la mémoire tampon principale, appelée zone de travail, la mémoire tampon principale étant divisée entre de l'espace utilisé et de l'espace libre, l'unité de traitement étant en outre programmée pour définir la zone de travail, et le contrôleur d'accès direct en mémoire comportant un gestionnaire de mémoire tampon conçu pour libérer des données écrites dans la mémoire tampon principale, en définissant le ou les emplacements de ces données en tant qu'espace libre, uniquement lorsque ces données sont hors de la zone de travail.

Grâce à l'invention, le contrôleur DMA d'un dispositif à unité de traitement programmée peut continuer à recevoir et envoyer des données depuis et vers la mémoire tampon principale, sans risquer de corrompre les données dont l'unité de traitement a besoin, c'est-à-dire celles contenues dans la zone de travail. Ainsi, l'unité de traitement peut avoir accès aux données qui lui sont nécessaires sans que le flot de données ne soit interrompu. En outre, la zone de travail étant définie par l'unité de traitement programmée, cette dernière peut donc être programmée pour que cette zone de travail évolue de la façon la plus souple possible afin d'optimiser son intégration dans la chaîne de traitement.

De façon optionnelle, l'unité de traitement est programmée pour attendre que le module de réception écrive des données reçues dans toute la zone de travail avant de lire et traiter les données de la zone de travail.

De façon optionnelle également, le module de réception est conçu pour écrire chaque donnée reçue à l'emplacement de la mémoire tampon principale indiqué par un pointeur, appelé pointeur d'entrée, et le gestionnaire de mémoire tampon est conçu pour, suite à l'écriture d'une donnée par le module d'écriture, déplacer le pointeur d'entrée vers l'emplacement suivant selon un parcours circulaire prédéterminé de la mémoire tampon principale.

De façon optionnelle également, l'unité de traitement est programmée pour écrire des données dans la zone de travail à la place de données écrites par le module de réception.

De façon optionnelle également, le contrôleur d'accès direct en mémoire comporte un module d'émission conçu pour lire des données écrites dans la mémoire tampon principale et les émettre hors du dispositif.

De façon optionnelle également, le module d'émission est conçu pour lire et émettre, vers l'extérieur du dispositif, la donnée écrite dans l'emplacement indiqué par un pointeur, appelé pointeur de sortie, la zone de travail est comprise entre un pointeur de début de zone de travail et un pointeur de fin de zone de travail, selon un parcours circulaire prédéterminé de la mémoire tampon principale, et le gestionnaire de mémoire tampon est conçu pour libérer la donnée lue et émise en déplaçant le pointeur de sortie vers l'emplacement suivant selon le parcours circulaire, uniquement si le pointeur de sortie est différent du pointeur de début de zone de travail.

De façon optionnelle également, l'unité de traitement est programmée pour définir la zone de travail en déplaçant le pointeur de début de zone de travail et/ou le pointeur de fin de zone de travail.

De façon optionnelle également, l'unité de traitement est programmée pour définir une zone, appelée zone de travail auxiliaire, d'une autre partie prédéterminée, appelé mémoire tampon auxiliaire, de la mémoire, l'unité de traitement est programmée pour écrire des données dans la zone de travail auxiliaire, et le contrôleur d'accès direct en mémoire est conçu pour lire, émettre vers l'extérieur du dispositif et libérer des données de la mémoire tampon auxiliaire, mais uniquement lorsqu'elles sont hors de la zone de travail auxiliaire.

L'invention a également pour objet une chaîne de traitement de données, comportant une pluralité de dispositifs de traitement configurés pour traiter un flot de données, dans laquelle l'un des dispositifs de traitement est conforme à un dispositif tel que défini précédemment.

L'invention a également pour objet un procédé de traitement de données, comportant une lecture et un traitement, par une unité de traitement, de données écrites, par un contrôleur d'accès direct en mémoire, dans une partie prédéterminée d'une mémoire, appelée mémoire tampon principale, comportant en outre les étapes suivantes :
- définition, par l'unité de traitement, d'une zone, appelée zone de travail, dans la mémoire tampon principale,
- lecture et traitement de données écrites dans la zone de travail,
- la mémoire tampon principale étant divisée entre de l'espace utilisé et de l'espace libre, libération, par le contrôleur d'accès direct en mémoire, de données écrites dans la mémoire tampon principale, en définissant le ou les emplacements de ces données en tant qu'espace libre, uniquement lorsque ces données sont hors de la zone de travail.

Enfin, l'invention a également pour objet un programme d'ordinateur téléchargeable depuis un réseau de communication et/ou enregistré sur un support lisible par ordinateur et/ou exécutable par un processeur, comprenant des instructions pour définir une zone de travail dans une partie, appelée mémoire tampon principale, d'une mémoire d'un dispositif, lorsque ledit programme est exécuté par une unité de traitement de ce dispositif ayant un accès en lecture à cette zone de travail, le dispositif comportant en outre un contrôleur d'accès direct en mémoire conçu pour écrire des données reçues depuis l'extérieur du dispositif dans la mémoire tampon principale, cette dernière étant divisée entre de l'espace utilisé et de l'espace libre, et le contrôleur d'accès direct en mémoire étant en outre conçu pour libérer des données écrites dans la mémoire tampon principale uniquement lorsque ces données sont hors de la zone de travail.

L'invention sera mieux comprise à l'aide de la description qui va suivre, donnée uniquement à titre d'exemple et faite en se référant aux dessins annexés dans lesquels :
- la figure 1 représente schématiquement la structure générale d'un réseau sur puce de dispositifs de traitement de données selon un mode de réalisation de l'invention,
- la figure 2 représente schématiquement la structure générale d'un exemple de chaîne de traitement de données réalisée par le réseau de la figure 1,
- la figure 3 détaille schématiquement l'un des dispositifs de traitement, à unité de traitement programmée, du réseau de la figure 1,
- les figures 4 à 6 illustrent les étapes successives de procédés mis en oeuvre par le dispositif de la figure 3,
- les figures 7 à 13 illustrent un exemple d'évolution du contenu d'une mémoire tampon principale du dispositif de la figure 3 au cours de son fonctionnement,
- la figure 14 détaille schématiquement une variante du dispositif de la figure 3,
- la figure 15 illustre les étapes successives d'un procédé d'émission de données mis en oeuvre par une unité de traitement programmée du dispositif de la figure 14, et
- les figures 16 à 23 illustrent un exemple d'évolution du contenu d'une mémoire tampon auxiliaire du dispositif de la figure 14 au cours de son fonctionnement.

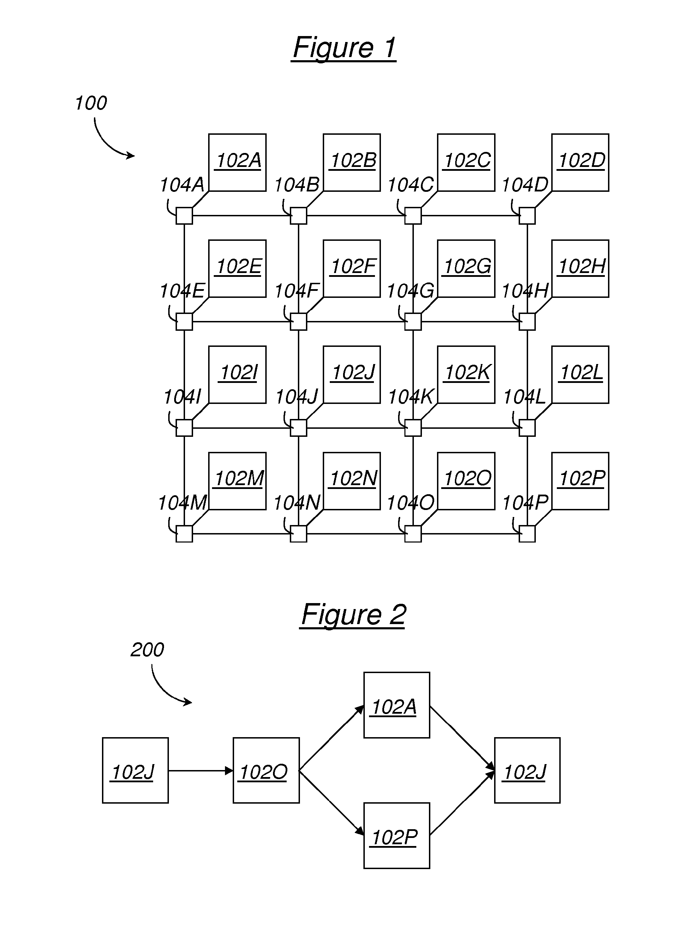

En référence à la figure 1, un réseau sur puce 100 (de l'anglais « Network-on-Chip » ou NoC) selon l'invention comporte une pluralité de dispositifs de traitement 102A ... 102P et une pluralité de routeurs 104A ... 104P. Les routeurs 104A ... 104P sont connectés entre eux et chacun d'eux est en outre connecté à un dispositif de traitement respectif. En variante, et comme c'est d'ailleurs généralement le cas en pratique, chaque routeur peut être connecté à plusieurs dispositifs de traitement. Ainsi, des données peuvent être échangées entre les dispositifs 102A ... 102P par l'intermédiaire des routeurs de manière asynchrone. Cette architecture est appelée architecture « en flot de données » ou bien « cadencée par les données ».

Les dispositifs 102B ... 102P sont par exemple des blocs de traitement matériels, c'est-à-dire que les traitements sont réalisés par des circuits électroniques figés, et non par un processeur exécutant un programme.

Le dispositif 102A est par exemple différent en ce que le traitement est réalisé par une unité de traitement, telle qu'un processeur générique ou processeur spécialisé dans le traitement de signaux (de l'anglais « Digital Signal Processor » ou DSP) mettant en oeuvre un programme d'ordinateur de traitement de données comme cela sera expliqué par la suite.

En variante, le réseau sur puce 100 pourrait comporter plusieurs dispositifs à unité de traitement programmée tels que le dispositif 102A localisés librement sur un ou plusieurs routeurs de l'architecture.

Par ailleurs, le dispositif 102A peut être conçu pour configurer le réseau 100 afin que ce dernier forme une chaîne de traitement, c'est-à-dire un enchaînement d'au moins certains des dispositifs 102A ... 102P. A cet effet, le dispositif 102A est en particulier conçu pour configurer chaque dispositif de la chaîne de traitement souhaitée afin que ce dispositif émette les données qu'il a traitées au dispositif suivant de la chaîne de traitement.

Un exemple de chaîne de traitement 200 est illustré sur la figure 2. Dans cet exemple, la chaîne de traitement 200 est constituée du dispositif 102J, suivi du dispositif traitement 1020, suivi des dispositifs 102A et 102P en parallèle, ces deux derniers étant suivis par le dispositif de traitement 102J. Le dispositif 102A a donc deux fonctions : configuration du réseau en chaîne de traitement, et traitement des données. On notera cependant qu'en variante, la configuration du réseau en chaîne de traitement pourrait être gérée par un autre dispositif que le dispositif 102A.

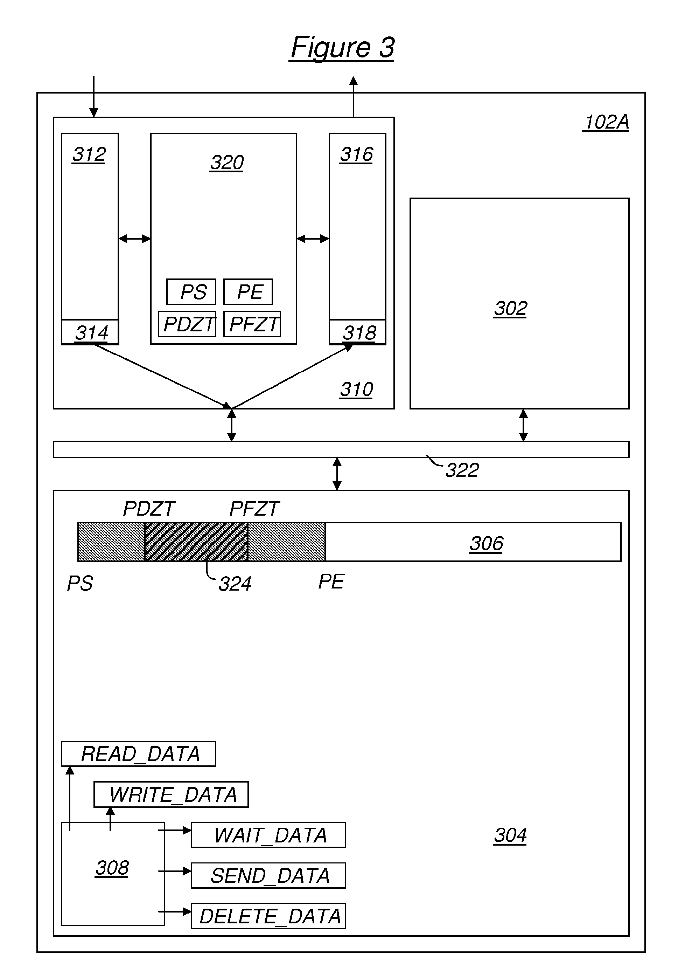

En référence à la figure 3, le dispositif 102A comporte tout d'abord une unité de traitement 302 conçue pour exécuter des programmes qui seront détaillés par la suite.

Le dispositif 102A comporte en outre une mémoire réinscriptible 304. Dans l'exemple décrit, il s'agit d'une mémoire vive, aussi appelée mémoire à accès aléatoire (de l'anglais « Random Access Memory » ou RAM).

Une partie 306 de la mémoire 304, appelée mémoire tampon principale, est définie dans la mémoire 304.

En outre, un programme de traitement 308 est enregistré dans la mémoire 304, ainsi que les primitives suivantes : WAIT_DATA, SEND_DATA, DELETE_DATA, READ_DATA et WRITE_DATA qui seront détaillées par la suite. Les primitives sont par exemple regroupées dans une bibliothèque de fonctions. Le programme de traitement 308 est destiné à être exécuté par l'unité de traitement 302 et fait appel aux primitives. En variante, le programme de traitement 308 et/ou les instructions des primitives pourraient être stockés ailleurs, en mémoire ROM, flash ou autre.

Le programme de traitement 308 est soit exécuté directement par l'unité de traitement 302, dans ce cas il est enregistré en langage machine compréhensible pour l'unité de traitement de même que les primitives qu'il appelle, soit exécuté de manière indirecte par l'intermédiaire d'une machine virtuelle, telle que la machine virtuelle Java (marque déposée). Dans ce dernier cas, le programme de traitement 308 et les primitives sont enregistrées dans un langage de machine virtuelle et l'unité de traitement exécute un programme de machine virtuelle traduisant à la volée le langage de machine virtuelle en langage machine compréhensible par l'unité de traitement 302.

Le dispositif 102A comporte en outre un contrôleur d'accès direct en mémoire 310, appelé par la suite contrôleur DMA (de l'anglais « Direct Memory Access »), qui a pour but de gérer les opérations de lectures/écritures dans la mémoire 304 à la place de l'unité de traitement 302, afin que le fonctionnement de cette dernière ne soit pas ralenti par ces opérations.

Le contrôleur DMA 310 comporte tout d'abord un module de réception 312 conçu pour recevoir des données provenant de l'extérieur du dispositif 102A, en particulier du ou des dispositifs de traitement qui le précèdent dans la chaîne de traitement. Il comporte une mémoire 314 de type « premier arrivé, premier sorti », aussi appelée mémoire FIFO (de l'anglais « First In, First Out ») dans laquelle les données reçues sont enregistrées provisoirement. Le module de réception 312 est en outre conçu pour écrire les données reçues (qui sont enregistrées dans sa mémoire FIFO 314) dans la mémoire tampon principale 306, de la manière qui sera détaillée plus loin.

Le contrôleur DMA 310 comporte en outre un module d'émission 316 conçu pour lire des données écrites dans la mémoire tampon principale 306 et pour les émettre hors du dispositif 102A, en particulier vers le ou les dispositifs de traitement qui le suivent dans la chaîne de traitement. Il comporte une mémoire FIFO 318 dans laquelle les données lues sont enregistrées provisoirement, avant d'être envoyées au(x) dispositif(s) suivant(s).

Le contrôleur DMA 310 comporte en outre un gestionnaire de mémoire tampon 320 conçu, d'une part, pour indiquer au module de réception 312 dans quels emplacements de la mémoire tampon principale 306 écrire les données reçues, et, d'autre part, pour indiquer au module d'émission 316 dans quels emplacements de la mémoire tampon principale 306 lire les données écrites pour les émettre hors du dispositif 102A.

Le dispositif 102A comporte en outre un bus de transfert de données 322 auquel l'unité de traitement 302, le contrôleur DMA 310 et la mémoire 304 sont connectés, de sorte que ces trois éléments peuvent échanger des données ou des messages d'information entre eux.

Le contrôleur DMA 310 est conçu pour gérer la mémoire tampon principale 306 de manière circulaire par l'utilisation de pointeurs, comme cela va être expliqué à présent. Dans l'exemple décrit, les pointeurs utilisés sont enregistrés dans une mémoire (non représentée) du gestionnaire de mémoire tampon 320.

Ainsi, le module de réception 312 est conçu pour écrire chaque donnée reçue via sa mémoire FIFO 314 à l'emplacement de la mémoire tampon principale 306 indiqué par un pointeur, appelé pointeur d'entrée PE et pour informer le gestionnaire de mémoire tampon 320 de l'écriture. Le gestionnaire de mémoire tampon 320 est conçu pour déplacer ce pointeur d'entrée PE (c'est-à-dire d'en modifier sa valeur), après chaque écriture, vers l'emplacement suivant selon un parcours circulaire prédéterminé de la mémoire tampon principale 306. Ainsi, le pointeur d'entrée PE se déplace le long du parcours circulaire. Dans l'exemple décrit, la mémoire tampon principale 306 est constituée d'emplacements de la mémoire 304 adjacents les uns aux autres, de sorte que la mémoire tampon principale 306 est définie par une adresse de début et une adresse de fin dans la mémoire 304. Dans ce cas, le pointeur d'entrée PE est déplacé par le gestionnaire de mémoire tampon 320 depuis l'adresse de début jusqu'à l'adresse de fin, puis à nouveau à l'adresse de début, et ainsi de suite.

Le gestionnaire de mémoire tampon 320 est en outre conçu pour demander au module d'émission 316 de réaliser une opération de lecture et d'envoi. Le module d'émission 316 est conçu, en réponse à cette demande, pour lire et émettre vers l'extérieur du dispositif 102A, via sa mémoire FIFO 318, la donnée écrite dans l'emplacement de la mémoire tampon principale 306 indiqué par un pointeur, appelé pointeur de sortie PS, sauf dans un cas qui sera détaillé plus loin. Le gestionnaire de mémoire tampon 320 est alors conçu pour déplacer le pointeur de sortie PS, après chaque lecture et émission par le module 316, vers l'emplacement suivant selon le parcours circulaire. Le pointeur de sortie PS est donc déplacé comme le pointeur d'entrée PE.

L'espace utilisé (indiqué en grisé sur la figure 3) de la mémoire tampon principale 306 est constitué des emplacements situés depuis le pointeur de sortie PS jusqu'au pointeur d'entrée PE selon le parcours circulaire, tandis que l'espace libre de la mémoire tampon est constitué des emplacements situés depuis le pointeur d'entrée PE jusqu'au pointeur de sortie PS selon le parcours circulaire.

Ainsi, chaque déplacement du pointeur de sortie PS correspond à une libération de l'emplacement mémoire indiqué par le pointeur de sortie PS (avant son déplacement), c'est-à-dire que cet emplacement devient de l'espace libre dans lequel de nouvelles données peuvent être écrites. On remarquera que généralement les données sont toujours physiquement présentes dans l'espace libre, mais qu'elles sont effacées d'un point de vue logique.

Le gestionnaire de mémoire tampon 320 est ainsi conçu pour libérer des emplacements de la mémoire tampon principale 306 dont les données sont lues et émises hors du dispositif 102A par le module d'émission 316.

Dans la suite, afin de pouvoir définir des positions relatives entre pointeurs le long du parcours circulaire, le pointeur de sortie PS sera utilisé comme origine de ce parcours circulaire.

L'unité de traitement 302 est conçue pour exécuter le programme de traitement 308.

Le programme de traitement 308 comporte des instructions pour définir une zone 324 de la mémoire tampon principale 306, appelée zone de travail, dans laquelle le gestionnaire de mémoire tampon 320 est conçu pour ne pas pouvoir libérer d'emplacements, c'est-à-dire qu'il est conçu pour ne libérer que des emplacements de la mémoire tampon principale 306 situés hors de la zone de travail 324. La zone de travail 324 est représentée en traits hachurés sur la figure 3 et les suivantes. Dans l'exemple décrit, la zone de travail 324 est définie par un pointeur de début de zone de travail PDZT et un pointeur de fin de zone de travail PFZT situé après le pointeur de début de zone de travail PDZT dans le sens du parcours circulaire. Ainsi, le gestionnaire de mémoire tampon 320 est conçu pour ne lire et émettre vers l'extérieur du dispositif 102A la donnée à l'emplacement indiqué par le pointeur de sortie PS (puis libérer cet emplacement) que lorsque ce dernier est situé avant le pointeur de début de zone de travail PDZT (configuration représentée sur la figure 3), et non pas lorsque les deux pointeurs sont égaux, c'est-à-dire qu'ils indiquent le même emplacement. Ainsi, l'intégrité de la zone de travail 324 est préservée.

Pour définir la zone de travail 324, c'est-à-dire notamment pour gérer séquentiellement son évolution, le programme de traitement 308 comporte des appels à des primitives comportant des instructions pour déplacer le pointeur de début de zone de travail PDZT et le pointeur de fin de zone de travail PFZT.

Ainsi, la primitive WAIT_DATA comporte des instructions pour déplacer le pointeur de fin de zone de travail PFZT d'une certaine distance suivant le parcours circulaire. Dans l'exemple décrit, cela est réalisé en incrémentant la valeur du pointeur de fin de zone de travail PFZT de N1 emplacements suivant le parcours circulaire : PFZT ← PFZT + N1.

Le programme de traitement 308 a besoin d'une certaine quantité de données pour pouvoir les traiter. Si cette quantité n'est pas disponible, il ne peut pas appliquer le traitement souhaité. Ainsi, de préférence, la distance de déplacement du pointeur de fin de zone de travail PFZT est prévue de sorte que la capacité de la zone de travail 324 (distance entre les pointeurs de début de zone de travail PDZT et de fin de zone de travail PFZT) après déplacement soit égale ou supérieure à cette quantité minimale de données.

Lorsque le pointeur de fin de zone de travail PFZT est déplacé devant le pointeur d'entrée PE, cela signifie que la zone de travail 324 n'est pas pleine et donc que toutes les données nécessaires au traitement ne sont pas disponibles. La primitive WAIT_DATA comporte alors des instructions pour attendre que la zone de travail 324 se remplisse. Ainsi, les instructions de la primitive WAIT_DATA peuvent être prévues pour lire périodiquement les deux pointeurs PFZT et PE et les comparer (méthode dite d'attente active, de l'anglais « polling »). En variante, c'est le gestionnaire de mémoire tampon 320 qui est conçu pour comparer ces deux pointeurs et engendrer une interruption de l'unité de traitement 302 (dans le sens où l'unité de traitement, en tant que processeur, reçoit et reconnaît un signal qui la fait changer d'état) lorsqu'ils deviennent égaux.

De préférence, pendant cette attente, l'unité de traitement 302 est apte à exécuter d'autres programmes ou d'autres tâches dans le programme 308.

La primitive SEND_DATA comporte des instructions pour déplacer le pointeur de début de zone de travail PDZT d'une certaine distance suivant le parcours circulaire. Ce déplacement a pour effet de faire sortir de la zone de travail 324 des données qui pourront alors être lues et émises par le contrôleur DMA 310. Dans l'exemple décrit, cela est réalisé en incrémentant la valeur du pointeur de début de zone de travail PDZT de N2 emplacements suivant le parcours circulaire : PDZT ← PDZT + N2. Pendant la lecture et l'envoi vers l'extérieur des données par le contrôleur DMA 310, l'unité de traitement 302 est conçue pour pouvoir travailler dans sa zone de travail 324.

La primitive DELETE_DATA comporte des instructions pour déplacer ensemble le pointeur de début de zone de travail PDZT et le pointeur de sortie PS, lorsqu'ils sont égaux (c'est-à-dire lorsque le contrôleur n'a plus de données à lire et émettre), d'une certaine distance suivant le parcours circulaire. De cette manière, les données sorties de la zone de travail 324 se retrouvent dans l'espace libre de la mémoire tampon principale 306 sans être lues ni émises par le contrôleur DMA 310, ce qui revient à les effacer. Dans l'exemple décrit, cela est réalisé en incrémentant la valeur du pointeur de début de zone de travail PDZT et la valeur du pointeur de sortie PS de N3 emplacements suivant le parcours circulaire : PDZT ← PDZT + N3 et PS ← PS + N3.

Le programme de traitement 308 comporte en outre des appels aux primitives suivantes.

La primitive READ_DATA comporte des instructions pour lire des données écrites dans la zone de travail 324, en accès direct, c'est-à-dire sans passer par le contrôleur DMA 310. De préférence, le programme de traitement 308 combine les primitives WAIT_DATA et READ_DATA afin de ne lire des données dans la mémoire tampon principale 306 dans le but de les traiter, que lorsque la zone de travail 324 est pleine, c'est-à-dire lorsque le pointeur d'entrée PE est situé après le pointeur de fin de zone de travail PFZT selon le parcours circulaire avec le pointeur de sortie comme origine.

La primitive WRITE_DATA comporte des instructions pour écrire des données dans la zone de travail 324 à la place de données écrites par le module de réception 312. L'écriture se fait en accès direct par l'unité de traitement 302 exécutant la primitive, c'est-à-dire sans passer par le contrôleur DMA 310. Les données écrites sont en particulier des données traitées par le programme de traitement 308. Le programme de traitement 308 combine les primitives WRITE_DATA et SEND_DATA afin de pouvoir émettre vers l'extérieur les données traitées, en passant par le contrôleur DMA 310.

Grâce à l'utilisation de la zone de travail 324, le contrôleur DMA 310 peut continuer à lire, émettre des données de la mémoire tampon principale 306 et libérer leurs emplacements, sans risquer de corrompre les données utilisées par l'unité de traitement 302 exécutant le programme de traitement 308, c'est-à-dire les données contenues dans la zone de travail 324. Ainsi, le traitement et l'envoi des données traitées peut se faire en parallèle, de sorte que la vitesse de traitement du dispositif 102A s'en trouve améliorée, permettant d'éviter que ce dispositif 102A ne forme un « goulot d'étranglement » pour le flot de données traversant la chaîne de traitement.

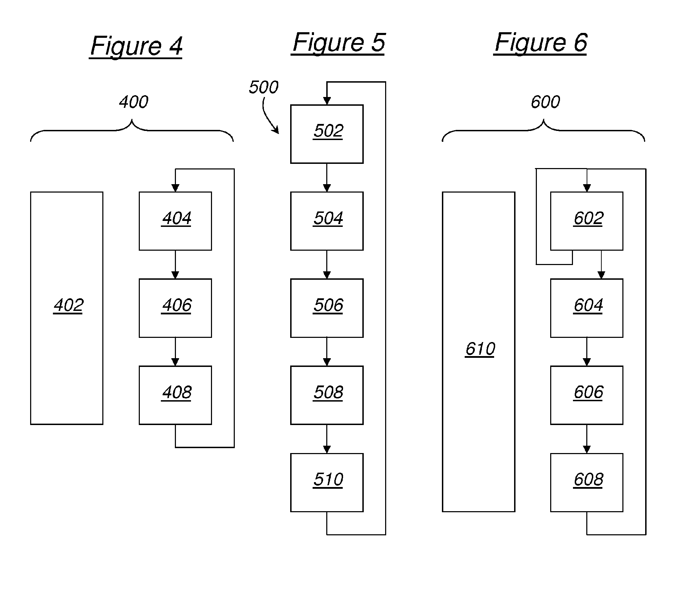

En référence à la figure 4, le dispositif 102A met en oeuvre un procédé de réception de données 400 comportant les étapes suivantes.

Au cours d'une étape 402, le module de réception 312 reçoit une donnée depuis l'extérieur du dispositif 102A et l'enregistre dans sa mémoire FIFO 314.

Parallèlement à l'étape 402, au cours d'une étape 404, le module de réception 312 transfert la donnée dont c'est le tour (la plus ancienne contenue dans la mémoire FIFO 314) depuis la mémoire FIFO 314 vers l'emplacement indiqué par le pointeur d'entrée PE.

Au cours d'une étape 406, le module de réception 312 informe le gestionnaire de mémoire tampon 320 de l'écriture réalisée.

Au cours d'une étape 408, le gestionnaire de mémoire tampon 320 déplace le pointeur d'entrée PE vers l'emplacement suivant de la mémoire tampon principale 306 selon le parcours circulaire.

En référence à la figure 5, l'unité de traitement 302 met en oeuvre, en exécutant le programme de traitement 308, un procédé de traitement 500 comportant les étapes suivantes.

Au cours d'une étape 502, l'unité de traitement 302 définit la zone de travail 324 au moyen de la primitive WAIT_DATA et, le cas échéant, attend le remplissage de la zone de travail 324.

Au cours d'une étape 504, l'unité de traitement 302 lit, au moyen de la primitive READ_DATA, des données de la zone de travail 324 et leur applique le traitement prévu dans le programme de traitement 308. En transmission audio/vidéo par exemple, le programme de traitement peut inclure des calculs de FFT, Viterbi ou autres.

Au cours d'une étape 506, l'unité de traitement 302 écrit, au moyen de la primitive WRITE_DATA, au début de la zone de travail 324 les données traitées.

Au cours d'une étape 508, l'unité de traitement 302 définit à nouveau la zone de travail au moyen de la primitive SEND_DATA, afin que le contrôleur DMA 310 lise et émette les données traitées, puis libère les emplacements qu'elles occupaient.

Au cours d'une étape 510, l'unité de traitement 302 définit à nouveau la zone de travail 324 en exécutant par exemple la primitive DELETE_DATA pour déplacer ensemble le pointeur de début de zone de travail PDZT et le pointeur de sortie PS d'une même distance, afin que les emplacements qui précèdent ces deux pointeurs une fois déplacés se retrouvent dans l'espace libre de la mémoire tampon principale 306, sans que les données qu'ils contiennent n'aient été lues et émises par le contrôleur DMA 310.

Le procédé 500 retourne alors à l'étape 502.

En référence à la figure 6, le dispositif 102A met en oeuvre un procédé d'émission de données 600 qui comporte les étapes suivantes.

Au cours d'une étape 602, le gestionnaire de mémoire tampon 320 compare le pointeur de sortie PS et le pointeur de début de zone de travail PDZT. S'ils sont égaux, le procédé retourne à l'étape 602. Si le pointeur de début de zone de travail PDZT est devant le pointeur de sortie PS, le procédé passe à l'étape 604.

Au cours de l'étape 604, le gestionnaire de mémoire tampon 320 demande au module d'émission 316 de réaliser une opération de lecture et d'émission d'une donnée vers l'extérieur.

En réponse, au cours d'une étape 606, le module d'émission 316 lit et copie dans sa mémoire FIFO 318 la donnée indiquée par le pointeur de sortie PS, pour émettre cette donnée depuis la mémoire FIFO vers l'extérieur du dispositif 102A quand viendra son tour.

Au cours d'une étape 608, le gestionnaire de mémoire tampon 320 déplace le pointeur de sortie PS vers l'emplacement suivant selon le parcours circulaire. Par ce déplacement, il libère l'emplacement de la donnée émise.

Le procédé 600 retourne alors à l'étape 602.

Parallèlement aux étapes 602 à 608, au cours d'une étape 610, le module d'émission 316 émet une par une les données suivant leur ordre d'arrivée dans sa mémoire FIFO 318.

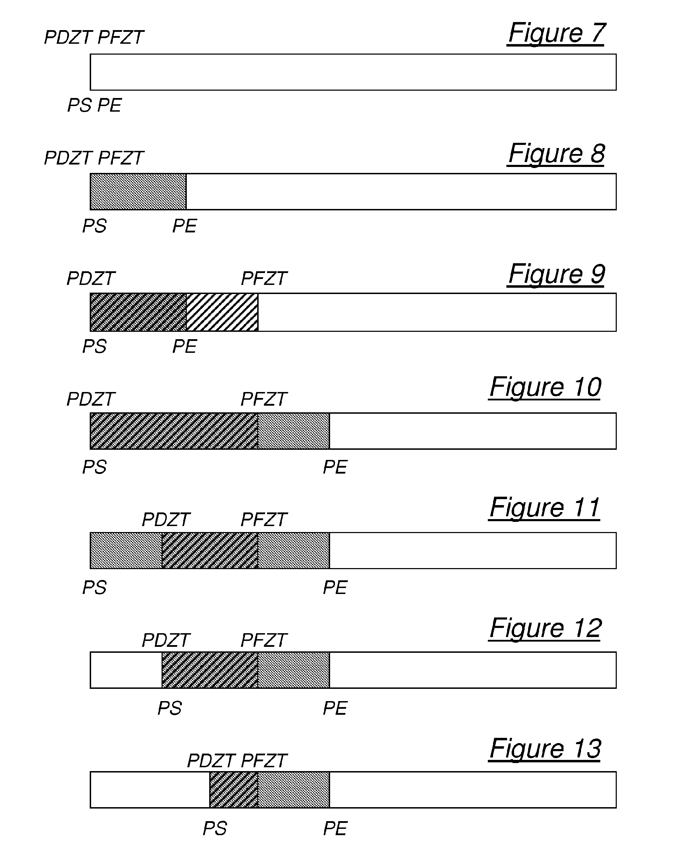

En référence aux figures 7 à 13 un exemple d'évolution du contenu de la mémoire tampon principale 306 va maintenant être décrit.

En référence à la figure 7, initialement, la mémoire tampon principale est vide, et les quatre pointeurs PE, PS, PDZT, PFZT indiquent l'adresse de début de la mémoire tampon principale 306.

En référence à la figure 8, des données sont reçues et écrites dans la mémoire tampon principale 306 par le contrôleur DMA 310, selon le procédé de la figure 4. Le pointeur d'entrée PE est donc déplacé et se trouve alors devant les autres pointeurs.

En référence à la figure 9 et conformément à l'étape 502 de la figure 5, l'unité de traitement 302 exécute les instructions de la primitive WAIT_DATA pour déplacer le pointeur de fin de zone de travail PFZT vers l'avant de manière à définir la zone de travail 324 avec une capacité correspondant à la quantité de données nécessaire pour que le programme de traitement 308 puisse traiter les données. Dans l'exemple décrit, le pointeur de fin de zone de travail PFZT est déplacé devant le pointeur d'entrée PE, de sorte que la zone de travail 324 n'est pas pleine. Ainsi, l'unité de traitement 302 attend que la zone de travail se remplisse.

En référence à la figure 10, des données sont à nouveau reçues et écrites dans la mémoire tampon principale 306 par le contrôleur DMA 310, selon le procédé de la figure 4. Le pointeur d'entrée PE se trouve alors devant le pointeur de fin de zone de travail PFZT, ce qui indique que la zone de travail 324 est pleine. En conséquence, l'unité de traitement 302 sort de son attente, lit (au moyen de la primitive READ_DATA conformément à l'étape 504 de la figure 5) et traite les données comme cela a été expliqué précédemment, puis écrit (au moyen de la primitive WRITE_DATA conformément à l'étape 506 de la figure 5) les données traitées au début de la zone de travail 324. Comme le pointeur de sortie PS est égal au pointeur de début de zone de travail PDZT, aucune lecture, émission ou libération d'emplacements de la zone de travail 324 n'a lieu.

En référence à la figure 11 et conformément à l'étape 508 de la figure 5, l'unité de traitement 302 exécute les instructions de la primitive SEND_DATA pour déplacer vers l'avant le pointeur de début de zone de travail PDZT, de manière à faire sortir de la zone de travail les données traitées. Comme le pointeur de début de zone de travail PDZT est alors situé devant le pointeur de sortie PS, le contrôleur DMA 310 peut émettre les données traitées et libérer les emplacements qu'elles occupaient en faisant avancer le pointeur de sortie PS, selon le procédé de la figure 6.

En référence à la figure 12, le pointeur de sortie PS rejoint le pointeur de début de zone de travail PDZT, indiquant que le contrôleur DMA 310 a émis toutes les données traitées, et libéré leurs emplacements.

En référence à la figure 13 et conformément à l'étape 510 de la figure 5, l'unité de traitement 302 exécute les instructions de la primitive DELETE_DATA pour déplacer vers l'avant le pointeur de début de zone de travail PDZT et le pointeur de sortie PS vers un même emplacement, ce qui a pour effet de placer les premiers emplacements de la zone de travail dans l'espace libre de la mémoire tampon principale.

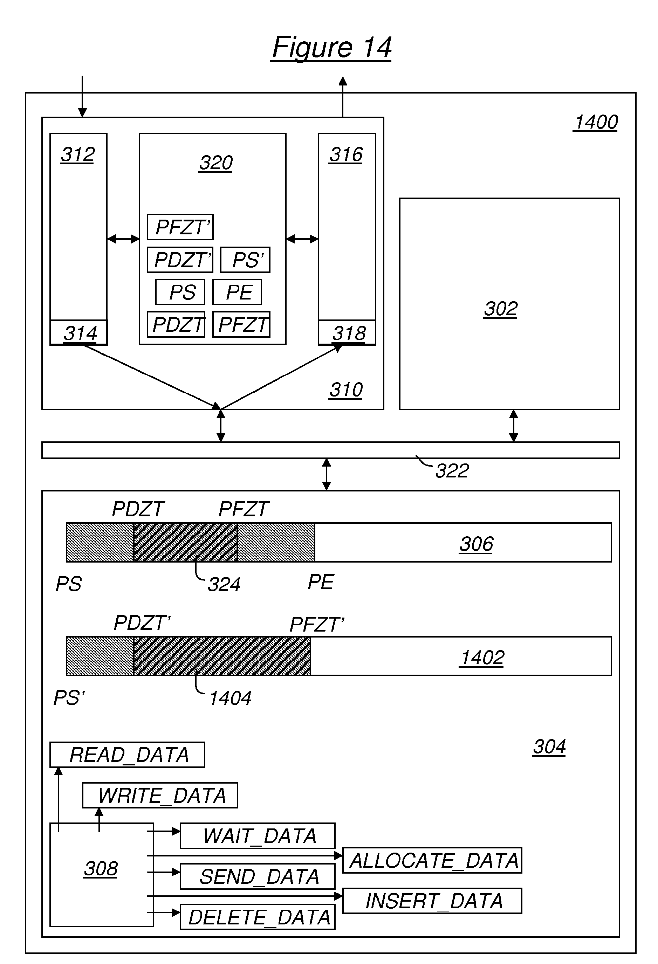

En référence à la figure 14, on va maintenant décrire un dispositif 1400 selon un second mode de réalisation de l'invention destiné à remplacer le dispositif 102A des figures précédentes. Les éléments communs aux deux dispositifs 102A, 1400 sont désignés par les mêmes références.

Le dispositif 1400 est identique au dispositif 102A, si ce n'est qu'une partie 1402 de la mémoire 304, appelée mémoire tampon auxiliaire, est définie dans la mémoire 304. L'unité de traitement 302 est programmée pour écrire des données dans cette mémoire tampon auxiliaire 1402. Ainsi, la mémoire tampon auxiliaire permet à l'unité de traitement 302 de ne pas être limitée par la capacité de la zone de travail 324 de la mémoire tampon principale 306 pour écrire des données.

Le module d'émission 316 est en outre conçu pour lire des données écrites dans la mémoire tampon auxiliaire 1402 et pour les émettre hors du dispositif 1400, de la même manière que pour la mémoire tampon principale 306. Le gestionnaire de mémoire tampon 320 est conçu pour indiquer au module d'émission 316 dans quels emplacements de la mémoire tampon auxiliaire 1402 lire les données écrites pour les émettre hors du dispositif 1400.

Dans l'exemple décrit, le contrôleur DMA 310 est conçu pour gérer également la mémoire tampon auxiliaire 1402 de manière circulaire. Ainsi, le gestionnaire de mémoire tampon 320 est conçu pour demander au module d'émission 316 de réaliser une opération de lecture et d'envoi à partir de la mémoire tampon auxiliaire 1402. Le module d'émission 316 est conçu, en réponse à cette demande, pour lire et émettre vers l'extérieur du dispositif 1400 la donnée écrite dans l'emplacement de la mémoire tampon auxiliaire 1402 indiqué par un pointeur, appelé pointeur de sortie PS', sauf dans un cas qui sera détaillé plus loin. Le gestionnaire de mémoire tampon 320 est alors conçu pour déplacer le pointeur de sortie PS', après chaque lecture et émission, vers l'emplacement suivant selon un parcours circulaire de la mémoire tampon auxiliaire 1402. Ainsi, chaque déplacement du pointeur de sortie PS' correspond à une libération de l'emplacement mémoire indiqué par le pointeur de sortie PS' (avant son déplacement), c'est-à-dire que cet emplacement devient de l'espace libre dans lequel de nouvelles données peuvent être écrites.

Dans la suite, afin de pouvoir définir des positions relatives entre pointeurs le long du parcours circulaire de la mémoire tampon auxiliaire 1402, le pointeur de sortie PS' sera utilisé comme origine de ce parcours circulaire.

Le programme de traitement 308 comporte des instructions pour définir une zone 1404 de la mémoire tampon auxiliaire 1402, appelée zone de travail auxiliaire, dans laquelle le gestionnaire de mémoire tampon 320 est conçu pour ne pas pouvoir libérer d'emplacements, c'est-à-dire qu'il est conçu pour ne libérer que des emplacements de la mémoire tampon auxiliaire 1402 situés hors de la zone de travail auxiliaire 1404. Dans l'exemple décrit, la zone de travail auxiliaire 1404 est définie par un pointeur de début de zone de travail auxiliaire PDZT' et un pointeur de fin de zone de travail auxiliaire PFZT' situé après le pointeur de début de zone de travail auxiliaire PDZT'. Ainsi, le gestionnaire de mémoire tampon 320 est conçu pour ne lire et émettre vers l'extérieur du dispositif 1400 la donnée à l'emplacement indiqué par le pointeur de sortie PS' (puis libérer cet emplacement) que lorsque ce dernier est situé avant le pointeur de début de zone de travail auxiliaire PDZT' (configuration représentée sur la figure 14), et non pas lorsque les deux pointeurs sont égaux, c'est-à-dire lorsqu'ils indiquent le même emplacement. Ainsi, l'intégrité de la zone de travail auxiliaire 1404 est préservée.

Pour définir la zone de travail auxiliaire 1404, le programme de traitement 308 comporte des appels à des primitives ALLOCATE_DATA et INSERT_DATA comportant des instructions pour déplacer le pointeur de début de zone de travail auxiliaire PDZT' et le pointeur de fin de zone de travail auxiliaire PFZT'.

Ainsi, la primitive ALLOCATE_DATA comporte des instructions pour déplacer le pointeur de fin de zone de travail auxiliaire PFZT' dans le sens du parcours circulaire. Plus précisément, la primitive ALLOCATE_DATA comporte des instructions pour déterminer si le déplacement est supérieur à la distance entre PFZT' et PS'. Si ce n'est pas le cas, la primitive est prévue pour attendre que des données soient libérées par le contrôleur DMA 310 de sorte que le pointeur de sortie PS' avance jusqu'à ce que le déplacement devienne supérieur au déplacement souhaité. Si c'est le cas, la primitive est alors prévue pour déplacer le pointeur de fin de zone de travail auxiliaire PFZT' du déplacement souhaité.

Les instructions de la primitive ALLOCATE_DATA peuvent être prévues pour lire périodiquement les deux pointeurs PFZT' et PS' et déterminer leur distance (méthode dite d'attente active, de l'anglais « polling »). En variante, c'est le gestionnaire de mémoire tampon 320 qui est conçu pour déterminer la distance entre ces deux pointeurs et engendrer une interruption de l'unité de traitement 302 (dans le sens où l'unité de traitement, en tant que processeur, reçoit et reconnaît un signal qui la fait changer d'état) lorsque la distance les séparant devient supérieure au déplacement souhaité.

La primitive INSERT_DATA comporte des instructions pour déplacer le pointeur de début de zone de travail auxiliaire PDZT' dans le sens du parcours circulaire. Ce déplacement a pour effet de faire sortir de la zone de travail auxiliaire 1404 des données qui pourront alors être lues et émises par le module d'émission 316 du contrôleur DMA 310.

On notera que le séquencement des données émises par le module d'émission 316 du contrôleur DMA 310 depuis les deux mémoires tampon 306 et 1402 est défini par le séquencement, connu du contrôleur DMA 310 grâce aux mises à jour des pointeurs PDZT et PDZT', de l'appel des primitives SEND_DATA et INSERT_DATA par le programme de traitement 308.

Dans ce mode de réalisation, la primitive WRITE_DATA comporte en outre des instructions pour écrire dans la zone de travail auxiliaire 1404, de la même manière que pour la zone de travail 324. De préférence, le programme de traitement 308 appelle la primitive WRITE_DATA pour écrire des données traitées dans la zone de travail auxiliaire 1404.

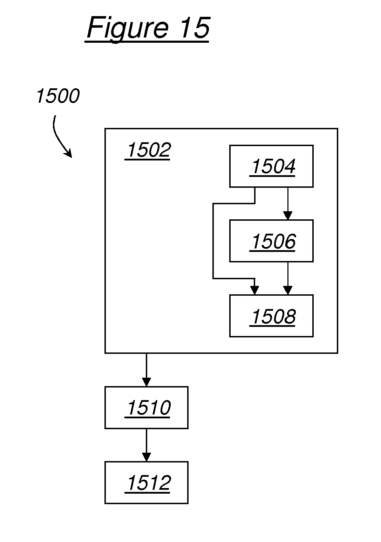

En référence à la figure 15, l'unité de traitement 302 met en oeuvre un procédé 1500 pour émettre des données hors du dispositif 1400.

Au cours d'une étape 1502, l'unité de traitement 302 exécute les instructions de la primitive ALLOCATE_DATA dans le but de déplacer le pointeur de fin de zone de travail auxiliaire PDZT' d'un certain déplacement souhaité. L'étape 1502 comporte les étapes 1504, 1506 et 1508 suivantes.

Ainsi, au cours de l'étape 1504, l'unité de traitement 302 détermine si la distance entre le pointeur de fin de zone de travail auxiliaire PFZT' et le pointeur de sortie PS' est supérieure au déplacement souhaité.

Si la distance est inférieure au déplacement souhaité, au cours de l'étape 1506, l'unité de traitement 302 attend que cette distance devienne supérieure au déplacement souhaité. Pendant cette attente, l'unité de traitement 302 peut exécuter d'autres programmes.

Si la distance est supérieure au déplacement souhaité, au cours de l'étape 1508, l'unité de traitement 302 déplace le pointeur de fin de zone de travail auxiliaire PFDZ' du déplacement souhaité.

Au cours d'une étape 1510, l'unité de traitement 302 exécute les instructions de la primitive WRITE_DATA pour écrire des données, par exemple des données traitées par le programme de traitement 308, dans la zone de travail auxiliaire 1404.

Au cours d'une étape 1512, l'unité de traitement 302 exécute les instructions de la primitive INSERT_DATA pour déplacer le pointeur de début de zone de travail auxiliaire PDZT'. Ainsi, les données sorties de la zone de travail auxiliaire 1404 peuvent être lues et émises, et les emplacements qu'elles occupent libérés, par le contrôleur DMA 310, de la même manière que pour la mémoire tampon principale 324.

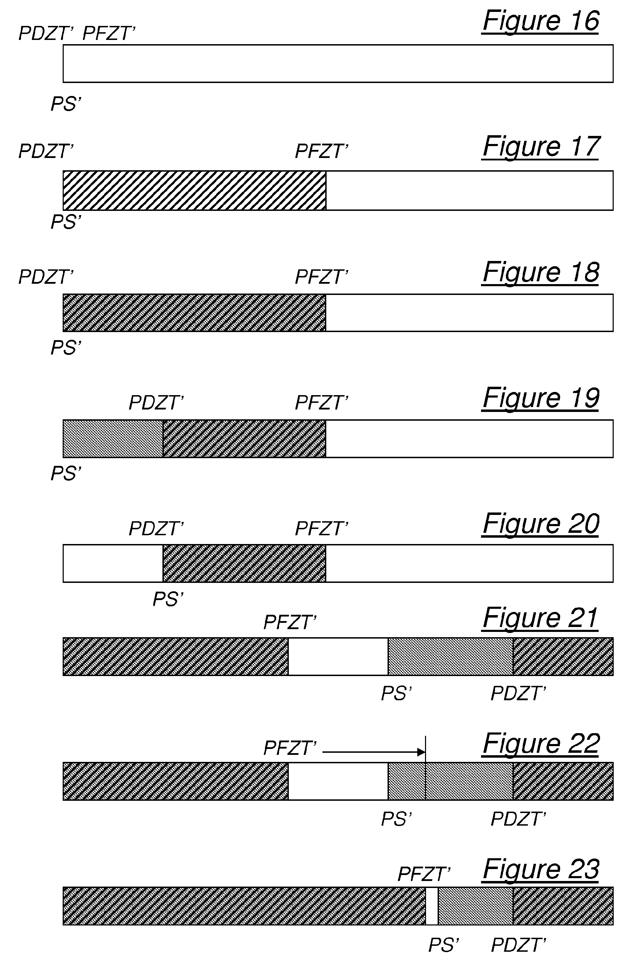

En référence aux figures 16 à 20, on va à présent décrire un exemple d'évolution du contenu de la mémoire tampon auxiliaire 1402 pendant l'exécution du procédé de la figure 15, dans le cas où le déplacement souhaité du pointeur de fin de zone de travail auxiliaire PFZT' est inférieur à la distance entre ce pointeur PFZT' et le pointeur de sortie PS'.

En référence à la figure 16, la mémoire tampon auxiliaire 1402 est initialement vide. Les trois pointeurs PFZT', PDZT' et PS' sont égaux.

En référence à la figure 17, le pointeur de fin de zone de travail auxiliaire PFZT' est déplacé conformément à l'étape 1508 par exécution de la primitive ALLOCATE_DATA.

En référence à la figure 18, des données sont écrites par l'unité de traitement 302 conformément à l'étape 1510 par exécution de la primitive WRITE_DATA.

En référence à la figure 19, le pointeur de début de zone de travail auxiliaire PDZT' est déplacé conformément à l'étape 1512 par exécution de la primitive INSERT_DATA.

En référence à la figure 20, les données sorties de la zone de travail auxiliaire 1404 sont lues et émises, et leurs emplacement libérés, par le contrôleur DMA 310, en faisant avancer le pointeur de sortie PS'. On remarquera que le pointeur de sortie PS' ne dépasse pas le pointeur de début de zone de travail auxiliaire PDZT', garantissant ainsi l'intégrité de la zone de travail auxiliaire 1404.

En référence aux figures 21 à 23, on va à présent décrire un exemple d'évolution du contenu de la mémoire tampon auxiliaire 1402 pendant l'exécution du procédé de la figure 15, dans le cas où le déplacement souhaité du pointeur de fin de zone de travail auxiliaire PFZT' est supérieur à la distance entre ce pointeur PFZT' et le pointeur de sortie PS'.

En référence à la figure 21, la zone de travail auxiliaire 1404 comporte initialement des données et le contrôleur DMA 310 lit et émet des données, et libère leurs emplacements (le pointeur de sortie PS' est situé en avance du pointeur de début de zone de travail auxiliaire PDZT').

En référence à la figure 22, l'unité de traitement 302 attend que des données soit émises par le contrôleur DMA 310, afin que la distance entre le pointeur de fin de zone de travail auxiliaire PFZT' et le pointeur de sortie PS' devienne supérieure au déplacement souhaité (indiqué par une flèche sur cette figure), conformément à l'étape 1506.

En référence à la figure 23, l'unité de traitement 302 déplace le pointeur de fin de zone de travail auxiliaire PFZT' conformément à l'étape 1508.

On remarquera qu'il n'est pas prévu que le contrôleur DMA 310 écrive des données dans la mémoire tampon auxiliaire 1402.

Il apparaît clairement qu'un dispositif de traitement tel que celui décrit précédemment est adapté à traiter un flot de données, sans interrompre le flot tout en étant, de part l'utilisation d'un traitement logiciel, très flexible.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, le dispositif de traitement 102A ou 1400 pourrait ne pas modifier le flot de données le traversant, ou bien ne pas émettre de flot de données. Le traitement pourrait alors consister en une simple analyse des données reçues - par exemple, la détermination d'un décalage de fréquence porteuse (de l'anglais « Carrier Frequency Offset ») - pour obtenir des informations de configuration d'autres dispositifs de traitement de la chaîne de traitement - par exemple, dans le cas de la détermination du décalage de fréquence porteuse, la configuration d'un dispositif de calcul de la rotation de données complexes qui va compenser l'effet du décalage de fréquence porteuse sur les données traitées.

Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Dispositif de traitement de données comportant :
- une mémoire (304),
- un contrôleur d'accès direct en mémoire (310) comportant un module de réception (312) conçu pour recevoir des données provenant de l'extérieur du dispositif et pour les écrire dans une partie prédéterminée de la mémoire, appelée mémoire tampon principale (306),
- une unité de traitement (302) programmée pour lire et traiter des données écrites par le module de réception (312) dans une zone de la mémoire tampon principale (306), appelée zone de travail (324),
**caractérisé en ce que** :
- la mémoire tampon principale (306) est divisée entre de l'espace utilisé et de l'espace libre,
- l'unité de traitement (302) est en outre programmée pour définir la zone de travail (324),
- le contrôleur d'accès direct en mémoire (310) comporte un gestionnaire de mémoire tampon (320) conçu pour libérer des données écrites dans la mémoire tampon principale (306), en définissant le ou les emplacements de ces données en tant qu'espace libre, uniquement lorsque ces données sont hors de la zone de travail (324).

2. Dispositif selon la revendication 1, dans lequel l'unité de traitement (302) est programmée pour attendre que le module de réception (312) écrive des données reçues dans toute la zone de travail (324) avant de lire et traiter les données de la zone de travail (324).

3. Dispositif selon la revendication 1 ou 2, dans lequel :
- le module de réception (312) est conçu pour écrire chaque donnée reçue à l'emplacement de la mémoire tampon principale (306) indiqué par un pointeur, appelé pointeur d'entrée (PE),
- le gestionnaire de mémoire tampon (320) est conçu pour, suite à l'écriture d'une donnée par le module d'écriture (312), déplacer le pointeur d'entrée (PE) vers l'emplacement suivant selon un parcours circulaire prédéterminé de la mémoire tampon principale (306).

4. Dispositif selon l'une des revendications 1 à 3, dans lequel l'unité de traitement (302) est programmée pour écrire des données dans la zone de travail (324) à la place de données écrites par le module de réception (312).

5. Dispositif selon l'une des revendications 1 à 4, dans lequel le contrôleur d'accès direct en mémoire (310) comporte un module d'émission (316) conçu pour lire des données écrites dans la mémoire tampon principale (306) et les émettre hors du dispositif.

6. Dispositif selon la revendication 5, dans lequel :
- le module d'émission (316) est conçu pour lire et émettre, vers l'extérieur du dispositif, la donnée écrite dans l'emplacement indiqué par un pointeur, appelé pointeur de sortie (PS),
- la zone de travail est comprise entre un pointeur de début de zone de travail (PDZT) et un pointeur de fin de zone de travail (PFZT), selon un parcours circulaire prédéterminé de la mémoire tampon principale (306),
- le gestionnaire de mémoire tampon (320) est conçu pour libérer la donnée lue et émise en déplaçant le pointeur de sortie (PS) vers l'emplacement suivant selon le parcours circulaire, uniquement si le pointeur de sortie (PS) est différent du pointeur de début de zone de travail (PDZT).

7. Dispositif selon la revendication 6, dans lequel l'unité de traitement (302) est programmée pour définir la zone de travail (324) en déplaçant le pointeur de début de zone de travail (PDZT) et/ou le pointeur de fin de zone de travail (PFZT).

8. Dispositif selon l'une quelconque des revendications 1 à 7, dans lequel
- l'unité de traitement (302) est programmée pour définir une zone, appelée zone de travail auxiliaire (1404), d'une autre partie prédéterminée, appelé mémoire tampon auxiliaire (1402), de la mémoire (304),
- l'unité de traitement (302) est programmée pour écrire des données dans la zone de travail auxiliaire (1404),
- le contrôleur d'accès direct en mémoire (310) est conçu pour lire, émettre vers l'extérieur du dispositif et libérer des données de la mémoire tampon auxiliaire (1402), mais uniquement lorsqu'elles sont hors de la zone de travail auxiliaire (1404).

9. Chaîne de traitement de données, comportant une pluralité de dispositifs de traitement (102A...102P) configurés pour traiter un flot de données, **caractérisée en ce que** l'un des dispositifs de traitement (102A ; 1400) est conforme à un dispositif selon l'une des revendications 1 à 8.

10. Procédé de traitement de données, comportant une lecture et un traitement (504), par une unité de traitement (302), de données écrites (404), par un contrôleur d'accès direct en mémoire (310), dans une partie prédéterminée d'une mémoire (304), appelée mémoire tampon principale (306), **caractérisé en ce qu'**il comporte en outre les étapes suivantes :
- définition (502, 508, 510), par l'unité de traitement (302), d'une zone (324), appelée zone de travail, dans la mémoire tampon principale,
- lecture et traitement (504) de données écrites dans la zone de travail (324),
- la mémoire tampon principale (306) étant divisée entre de l'espace utilisé et de l'espace libre, libération (608), par le contrôleur d'accès direct en mémoire (310), de données écrites dans la mémoire tampon principale (306), en définissant le ou les emplacements de ces données en tant qu'espace libre, uniquement lorsque ces données sont hors de la zone de travail (324).

11. Programme d'ordinateur téléchargeable depuis un réseau de communication et/ou enregistré sur un support lisible par ordinateur et/ou exécutable par un processeur, **caractérisé en ce qu'**il comprend des instructions (WAIT_DATA ; SEND_DATA; DELETE_DATA) pour définir une zone de travail (324) dans une partie, appelée mémoire tampon principale (306), d'une mémoire (304) d'un dispositif (102A ; 1400), lorsque ledit programme est exécuté par une unité de traitement (302) de ce dispositif (102A ; 1400) ayant un accès en lecture à cette zone de travail (324), le dispositif comportant en outre un contrôleur d'accès direct en mémoire (310) conçu pour écrire des données reçues depuis l'extérieur du dispositif (102A ; 1400) dans la mémoire tampon principale (306), cette dernière étant divisée entre de l'espace utilisé et de l'espace libre, et le contrôleur d'accès direct en mémoire (310) étant en outre conçu pour libérer des données écrites dans la mémoire tampon principale (306) uniquement lorsque ces données sont hors de la zone de travail (324).

## Patentansprüche

1. Vorrichtung zur Datenverarbeitung, die Folgendes umfasst:
- einen Speicher (304),
- eine Speicherdirektzugriffssteuerung (310), die ein Empfangsmodul (312) umfasst, das zum Empfang von Daten ausgelegt ist, die von außerhalb der Vorrichtung stammen, und um diese in einen vorbestimmten Teil des Speichers zu schreiben, der Haupt-Pufferspeicher (306) genannt wird,
- eine Verarbeitungseinheit (302), die dazu programmiert ist, vom Empfangsmodul (312) geschriebene Daten in einem Bereich des Haupt-Pufferspeichers (306) zu lesen und zu verarbeiten, der Arbeitsbereich (324) genannt wird,
**dadurch gekennzeichnet, dass**:
- der Haupt-Pufferspeicher (306) in verwendetem Platz und freiem Platz aufgeteilt wird,
- die Verarbeitungseinheit (302) des Weiteren dazu programmiert ist, den Arbeitsbereich (324) zu definieren,
- die Speicherdirektzugriffssteuerung (310) eine Pufferspeicherverwaltung (320) umfasst, die dazu ausgelegt ist, in den Haupt-Pufferspeicher (306) geschriebene Daten freizugeben, indem der oder die Orte bzw. Speicherorte dieser Daten als freier Platz definiert werden, ausschließlich wenn diese Daten sich außerhalb des Arbeitsbereichs (324) befinden.

2. Vorrichtung nach Anspruch 1, in der die Verarbeitungseinheit (302) dazu programmiert wird, darauf zu warten, dass das Empfangsmodul (312) empfangene Daten in den ganzen Arbeitsbereich (324) schreibt, bevor es die Daten des Arbeitsbereichs (324) liest und verarbeitet.

3. Vorrichtung nach Anspruch 1 oder 2, in der:
- das Empfangsmodul (312) dazu ausgelegt ist, die einzelnen empfangenen Daten an den Ort des Haupt-Pufferspeichers (306) zu schreiben, die durch einen Zeiger angezeigt wird, der Eingangszeiger (PE) genannt wird,
- die Pufferspeicherverwaltung (320) dazu ausgelegt ist, infolge des Schreibens einzelner Daten durch das Empfangsmodul (312), den Eingangszeiger (PE) zum nächsten Ort entsprechend eines vorbestimmten kreisförmigen Laufs des Haupt-Pufferspeichers (306) zu verschieben.

4. Vorrichtung nach einem der Ansprüche von 1 bis 3, in der die Verarbeitungseinheit (302) dazu programmiert ist, Daten in den Arbeitsbereich (324) anstelle der durch das Empfangsmodul (312) geschriebenen Daten zu schreiben.

5. Vorrichtung nach einem der Ansprüche von 1 bis 4, in der die Speicherdirektzugriffssteuerung (310) ein Sendemodul (316) umfasst, das dazu ausgelegt ist, in den Haupt-Pufferspeicher (306) geschriebene Daten zu lesen, und sie aus der Vorrichtung zu senden.

6. Vorrichtung nach Anspruch 5, in der:
- das Sendemodul (316) dazu ausgelegt ist, einzelne Daten, die an dem Ort geschrieben stehen, der durch einen Zeiger angezeigt wird, der Ausgangszeiger (PS) genannt wird, zu lesen und außerhalb der Vorrichtung zu senden,
- der Arbeitsbereich zwischen einem Arbeitsbereichsanfangs-Zeiger (PDZT) und einem Arbeitsbereichsenden-Zeiger (PFZT) liegt, entsprechend eines vorbestimmten kreisförmigen Laufs des Haupt-Pufferspeichers (306),
- die Pufferspeicherverwaltung (320) dazu ausgelegt ist, die gelesenen und geschriebenen Einzeldaten freizugeben, indem der Ausgangszeiger (PS) an den darauffolgenden Ort entsprechend des kreisförmigen Laufs verschoben wird, ausschließlich wenn der Ausgangszeiger (PS) sich vom Arbeitsbereichsanfangs-Zeiger (PDZT) unterscheidet.

7. Vorrichtung nach Anspruch 6, in dem die Verarbeitungseinheit (302) dazu programmiert ist, den Arbeitsbereich (324) zu definieren, indem der Arbeitsbereichsanfangs-Zeiger (PDZT) und/oder den Arbeitsbereichsenden-Zeiger (PFZT) verschoben wird.

8. Vorrichtung nach irgendeinem der Ansprüche von 1 bis 7, in der
- die Verarbeitungseinheit (302) dazu programmiert ist, einen zusätzlicher Arbeitsbereich (1404) genannten Bereich zu definieren, der einen anderen vorbestimmten Teil des Speichers (304) darstellt, der zusätzlicher Pufferspeicher (1402) genannt wird,
- die Verarbeitungseinheit (302) dazu programmiert ist, Daten in den zusätzlichen Arbeitsbereich (1404) zu schreiben,
- die Speicherdirektzugriffssteuerung (310) dazu ausgelegt ist, Daten aus dem zusätzlichen Pufferspeicher (1402) zu lesen, außerhalb der Vorrichtung zu senden und freizugeben, aber ausschließlich wenn sie außerhalb des zusätzlichen Arbeitsbereichs (1404) liegen.

9. Datenverarbeitungskette, die eine Vielzahl an Vorrichtungen zur Verarbeitung (102A... 102P) umfasst, die dazu konfiguriert sind, um einen Datenfluss zu verarbeiten, **dadurch gekennzeichnet, dass** eine der Vorrichtungen zur Verarbeitung (102A; 1400) einer Vorrichtung nach einem der Ansprüche von 1 bis 8 entspricht.

10. Verfahren zur Datenverarbeitung, das einen Lesevorgang und eine Verarbeitung (504) durch eine Verarbeitungseinheit (302) von Daten umfasst, die durch eine Speicherdirektzugriffssteuerung (310) in einen vorbestimmten Teil eines Speichers (304) geschrieben (404) werden, der Haupt-Pufferspeicher (306) genannt wird, **dadurch gekennzeichnet, dass** es des Weiteren die folgenden Schritte umfasst:
- definieren (502, 508, 510), durch die Verarbeitungseinheit (302), eines Bereichs (324) im Haupt-Pufferspeicher, der Arbeitsbereich genannt wird,
- lesen und verarbeiten (504) von Daten, die in den Arbeitsbereich (324) geschrieben werden,
- während der Haupt-Pufferspeicher (306) in verwendetem Platz und freiem Platz aufgeteilt wird, freigeben (608), durch die Speicherdirektzugriffssteuerung (310), der Daten, die in den Haupt-Pufferspeicher (306) geschrieben worden sind, indem der oder die Orte bzw. Speicherorte dieser Daten als freier Platz definiert werden, ausschließlich wenn diese Daten außerhalb des Arbeitsbereichs (324) liegen.

11. Ein Computerprogramm, das von einem Kommunikationsnetz heruntergeladen werden kann und/oder auf einem computerlesbaren Träger gespeichert wird und/oder von einem Prozessor ausführbar ist, **dadurch gekennzeichnet, dass** es Anweisungen (WAIT_DATA; SEND_DATA; DELETE_DATA) umfasst, um einen Arbeitsbereich (324) in einem Haupt-Pufferspeicher (306) genannten Teil eines Speichers (304) einer Vorrichtung (102A; 1400) zu definieren, wenn das genannte Programm von einer Verarbeitungseinheit (302) dieser Vorrichtung (102A; 1400) ausgeführt wird, die einen lesenden Zugang zu diesem Arbeitsbereich (324) aufweist, wobei die Vorrichtung des Weiteren eine Speicherdirektzugriffssteuerung (310) umfasst, die dazu ausgelegt ist, Daten, die von außerhalb der Vorrichtung (102A; 1400) stammen, in den Haupt-Pufferspeicher (306) zu schreiben, wobei diese Letzte in verwendetem Platz und freiem Platz aufgeteilt wird, und wobei die Speicherdirektzugriffssteuerung (310) des Weiteren dazu ausgelegt ist, in den Haupt-Pufferspeicher (306) geschriebene Daten freizugeben, ausschließlich wenn diese Daten außerhalb des Arbeitsbereichs (324) liegen.

## Claims

1. Data processing device comprising:
- a memory (304),
- a direct memory access controller (310) comprising a receiving module (312) designed to receive data coming from outside the device and for writing it in a predetermined portion of the memory, called the main buffer memory (306),
- a processing unit (302) programmed to read and process data written by the receiving module (312) in a main buffer memory area (306) called the work area (324),
**characterized in that**:
- the main buffer memory (306) is divided between used space and free space,
- the processing unit (302) is further programmed to define the work area (324),
- the direct memory access controller (310) comprises a buffer memory manager (320) designed to free data written in the main buffer memory (306), by defining the location(s) of this data as free space, only when this data is outside the work area (324).

2. Device according to claim 1, wherein the processing unit (302) is programmed to wait until the receiving module (312) writes data received in the entire work area (324) before reading and processing the data of the work area (324).

3. Device according to claim 1 or 2, wherein:
- the receiving module (312) is designed to write each data item received in the location of the main buffer memory (306) indicated by a pointer, called the input pointer (PE),
- the buffer memory manager (320) is designed so as, after a data item has been written by the writing module (312), to move the input pointer (PE) toward the next location according to a predetermined circular path of the main buffer memory (306).

4. Device according to one of claims 1 to 3, wherein the processing unit (302) is programmed to write data in the work area (324) in the place of data written by the receiving module (312).

5. Device according to one of claims 1 à 4, wherein the direct memory access controller (310) comprises a transmission module (316) designed to read data written in the main buffer memory (306) and to transmit it outside the device.

6. Device according to claim 5, wherein:
- the transmission module (316) is designed to read and transmit, outside the device, the data written in the location indicated by a pointer, called the output pointer (PS),
- the work area is between a work area start pointer (PDZT) and a work area end pointer (PFZT), according to a predetermined circular path of the main buffer memory (306),
- the buffer memory manager (320) is designed to free the data read and transmitted by moving the output pointer (PS) toward the next location according to the circular path, only if the output pointer (PS) is different from the work area start pointer (PDZT).

7. Device according to claim 6, wherein the processing unit (302) is programmed to define the work area (324) by moving the work area start pointer (PDZT) and/or the work area end pointer (PFZT).

8. Device according to any one of claims 1 to 7, wherein
- the processing unit (302) is programmed to define an area, called the auxiliary work area (1404), of another predetermined portion, called the auxiliary buffer memory (1402), of the memory (304),
- the processing unit (302) is programmed to write data in the auxiliary work area (1404),
- the direct memory access controller (310) is designed to read, transmit outside the device and free data of the auxiliary buffer memory (1402), but only when it is outside the auxiliary work area (1404).

9. Data processing chain, comprising a plurality of processing devices (102A...102P) configured so as to process a data flow, **characterized in that** one of the processing devices (102A; 1400) is a device according to one of claims 1 to 8.

10. Data processing method, comprising reading and processing (504) by a processing unit (302), of written data (404), by a direct memory access controller (310), in a predetermined portion of a memory (304), called the main buffer memory (306), **characterized in that** it further comprises the following steps:
- definition (502, 508, 510), by the processing unit (302), of an area (324), called the work area, in the main buffer memory,
- reading and processing (504) of data written in the work area (324),
- the main buffer memory (306) being divided between used space and free space, freeing (608), by the direct memory access controller (310), of data written in the main buffer memory (306), by defining the location(s) of this data as free space, only when this data is outside the work area (324).

11. Computer program capable of being downloaded from a communication network and/or stored on a computer readable medium and/or executable by a processor, **characterized in that** it includes instructions (WAIT_DATA; SEND_DATA; DELETE_DATA) for defining a work area (324) in a portion, called the main buffer memory (306), of a memory (304) of a device (102A; 1400), when said program is executed by a processing unit (302) of this device (102A; 1400) having read access to this work area (324), the device further comprising a direct memory access controller (310) designed to write data received from outside the device (102A; 1400) in the main buffer memory (306), the latter being divided between used space and free space, and the direct memory access controller (310) being further designed so as to free data written in the main buffer memory (306) only when this data is outside the work area (324).
